# EUROPEAN PATENT APPLICATION

(11) **EP 4 385 620 A1**
(43) Date of publication of application: **19.06.2024**
(21) Application number: 23164637.3
(22) Date of filing: 28.03.2023
(51) Int. Cl.: B01J 23/78, B01J 35/00, B01J 35/10, B01J 37/00, B01J 37/03, B01J 37/08

(54) **IRON-BASED CATALYST AND METHOD OF HYDROGENATING CARBON DIOXIDE**

(30) Priority: 16.12.2022 TW 111148383
(71) Applicant: Industrial Technology Research Institute, Chutung, Hsinchu 310401 (TW)
(72) Inventor: WU, Kuo-Ching, Kinmen County (TW); LIN, Pao-Tsern, Hsinchu County (TW); HSU, Hsi-Yen, Hsinchu City (TW); CHEN, Chao-Huang, Hsinchu City (TW)
(74) Representative: Michalski Hüttermann & Partner Patentanwälte mbB

(57) **Abstract**

A method of hydrogenating carbon dioxide, including contacting carbon dioxide and hydrogen with an iron-based catalyst to form CₙH₂ₙ, CₙH₂ₙ₊₂, or a combination thereof, wherein n is 1 to 9, and the iron-based catalyst includes 70 mol% to 97 mol% of porous FeO(OH)ₓ (wherein x is 1 or 2), and 3 mol% to 30 mol% of alkaline metal compound loaded onto the porous FeO(OH)ₓ.

## Description

### TECHNICAL FIELD

The technical field relates to an iron-based catalyst for directly converting carbon dioxide to olefin.

### BACKGROUND

Carbon monoxide serving as a major raw material in a conventional hydrogenation process can be reacted with hydrogen to form what is called syngas, or synthesis gas. This CO/H₂ gas mixture is reacted to form petrochemical olefins such as gasoline and diesel. There is no commercial process at present for directly converting carbon dioxide to olefins. When carbon dioxide is converted to olefins, the carbon dioxide should firstly be converted to carbon monoxide, and the carbon monoxide is then reacted with hydrogen to form olefins.

Accordingly, a novel catalyst other than carbon monoxide and a corresponding conversion condition is called for directly converting carbon dioxide and hydrogen to olefins.

### Summary

One embodiment of the disclosure provides an iron-based catalyst, including 70 mol% to 97 mol% of porous FeO(OH)ₓ, wherein x is 1 or 2; and 3 mol% to 30 mol% of alkaline metal compound loaded on the porous FeO(OH)ₓ.

One embodiment of the disclosure provides a method of hydrogenating carbon dioxide, including contacting carbon dioxide and hydrogen with an iron-based catalyst to form CₙH₂ₙ, CₙH₂ₙ₊₂, or a combination thereof, wherein n is 1 to 9, wherein the iron-based catalyst includes 70 mol% to 97 mol% of porous FeO(OH)ₓ, wherein x is 1 or 2; and 3 mol% to 30 mol% of alkaline metal compound loaded on the porous FeO(OH)ₓ.

A detailed description is given in the following embodiments with reference to the accompanying drawings.

### BRIEF DESCRIPTION OF the DRAWINGS

The disclosure can be better understood by reading the subsequent detailed descriptions and examples with references made to the accompanying drawings, wherein:
Fig. 1 shows a Raman spectrum of iron-based support in one embodiment of the disclosure.
Fig. 2 shows a Raman spectrum of iron-based support in one embodiment of the disclosure.
Fig. 3 shows a Raman spectrum of iron-based support in one embodiment of the disclosure.

### DETAILED DESCRIPTION

In the following detailed descriptions, for the purpose of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

One embodiment of the disclosure provides an iron-based catalyst, including 70 mol% to 97 mol% of porous FeO(OH)ₓ, wherein x is 1 or 2; and 3 mol% to 30 mol% of alkaline metal compound loaded on the porous FeO(OH)ₓ. If x=0, the iron-based support will be FeO (i.e. iron oxide), which cannot directly hydrogenate carbon dioxide to olefins. If the alkaline metal compound amount is too high, the conversion rate of the carbon dioxide will be too low to be efficiently converted to the olefins. If the alkaline metal compound amount is too low, the intermediate products such as carbon monoxide and methane amount will be too high. In general, the iron-based support is substantially free of iron oxides such as FeO, Fe₂O₃, Fe₃O₄, or the like, which can be determined by Raman spectrum of the iron-based support. In general, the iron oxide will degrade the performance of directly converting the carbon dioxide to olefins.

In some embodiments, the porous FeO(OH)ₓ has a specific surface area of at least 100 m²/g, usually in the range of 100 m²/g to 300 m²/g. If the specific surface area of the porous FeO(OH)ₓ is too small, the reactive surface area will be too small, and the catalyst performance will be insufficient. The synthetic skill at present cannot easily form a porous FeO(OH)ₓ having a surface area higher than 300 m²/g. In some embodiments, the porous FeO(OH)ₓ has a pore volume of 0.2 cm³/g to 0.5 cm³/g. If the pore volume of the porous FeO(OH)ₓ is too small, the surface area and activity of the porous FeO(OH)ₓ will decline. In some embodiments, the porous FeO(OH)ₓ has an average pore size of 40 Å to 70 Å. If the average pore size of porous FeO(OH)ₓ is too large, the surface area and activity of the porous FeO(OH)ₓ will decline.

In some embodiments, the alkaline metal compound includes sodium carbonate, potassium carbonate, sodium hydroxide, potassium hydroxide, sodium oxide, potassium oxide, or a combination thereof. In general, the alkaline metal compound is common alkaline such as sodium carbonate, potassium carbonate, sodium hydroxide, potassium hydroxide, or a combination thereof. However, a part of the carbonate will be decomposed to carbon dioxide and oxides during the heating process, and a part of the hydroxide will be dehydrogenated to form oxides during the heating process.

In some embodiments, the iron-based catalyst can be formed by the following steps. First, the alkaline liquid (such as ammonia, sodium hydroxide aqueous solution, potassium hydroxide aqueous solution, sodium carbonate aqueous solution, or potassium carbonate aqueous solution) is rapidly mixed with the iron salt aqueous solution (such as iron nitrate aqueous solution or iron hydroxide aqueous solution). For example, the alkaline liquid and the iron salt aqueous solution can be stirred at medium to high speed (e.g. >1000 rpm) for a short period of time (e.g. less than 5 minutes) to be rapidly mixed. Alternatively, the rapid mixing can be performed by any other methods and is not limited to stirring at high speed. If the mixing is not fast enough, the iron-based support will have a specific surface area that is too low, a pore volume that is too small, and an average pore size that is too large.

Subsequently, the pH value of the mixture is adjusted to 8 to 10 (e.g. 9) and kept for 1 to 3 hours in order to precipitate. If the pH value is too low, the precipitate will have a particle size that is too large and an average pore size that is too huge. If the pH value of the mixture is too high, the precipitate cannot be efficiently formed. The precipitate is then filtered out, and the filtered cake is washed out with water and baked to obtain an iron-based support, i.e. FeO(OH)ₓ. If the alkaline liquid is ammonia, the iron-based support should be further immersed into an aqueous solution of alkaline metal compound such as sodium hydroxide, potassium hydroxide, sodium carbonate, or potassium carbonate for loading the alkaline metal compound onto the iron-based support. If the alkaline liquid is sodium hydroxide aqueous solution, potassium hydroxide aqueous solution, sodium carbonate aqueous solution, or potassium carbonate aqueous solution, the loading step can be optionally omitted. Finally, the iron-based support having the alkaline metal compound loaded thereon is dried and shaped to obtain the iron-based catalyst.

One embodiment of the disclosure provides a method of hydrogenating carbon dioxide, including contacting carbon dioxide and hydrogen with the iron-based catalyst to form CₙH₂ₙ, CₙH₂ₙ₊₂, or a combination thereof, wherein n is 1 to 9. In some embodiments, the hydrogen and the carbon dioxide have a ratio of 2:1 to 4:1, and the hydrogen and the carbon dioxide have a gas hourly space velocity (GHSV) of 300 hr⁻¹ to 3000 hr⁻¹. If the hydrogen amount is too high, the un-reacted hydrogen amount will be too high, which causes waste of resources. Moreover, the methane content in the product will be too high. If the hydrogen amount is too low, the insufficient hydrogen amount will result in an overly low conversion rate of the carbon dioxide. If the gas hourly space velocity of the hydrogen and the carbon dioxide is too high, the contact time will be insufficient to form the olefin. If the gas hourly space velocity of the hydrogen and the carbon dioxide is too low, the unit catalyst efficiency will be low and the economic benefit will be insufficient.

In some embodiments, the step of contacting the carbon dioxide and the hydrogen with the iron-based catalyst is performed under a pressure of 50 to 400 psi at a temperature of 260 to 360°C. If the pressure is too high, the energy consumption will be too high. If the pressure is too low, the multi-carbon olefins cannot be efficiently formed. If the temperature is too high, the carbon monoxide and methane will be easily formed. If the temperature is too low, the carbon dioxide cannot efficiently react.

In some embodiments, the conversion rate of the carbon dioxide is 50 to 80%, and the yield of CₙH₂ₙ, CₙH₂ₙ₊₂, or a combination thereof is 45 to 75%. Note that the conventional methods of directly converting carbon dioxide to olefins (e.g. CₙH₂ₙ, CₙH₂ₙ₊₂, or a combination thereof) rather than carbon monoxide usually have conversion rates far below 50%. In addition, the number n in the products (CₙH₂ₙ, CₙH₂ₙ₊₂, or a combination thereof), is mainly below 3.

Accordingly, the method of fabricating the iron-based catalyst in the disclosure is easy and suits for mass production. This iron-based catalyst may be efficient to directly convert the carbon dioxide to the olefin.

Below, exemplary embodiments will be described in details with reference to accompanying drawings so as to be easily realized by a person having ordinary knowledge in the art. The inventive concept may be embodied in various forms without being limited to the exemplary embodiments set forth herein. Descriptions of well-known parts are omitted for clarity, and like reference numerals refer to like elements throughout.

### Examples

### Example 1

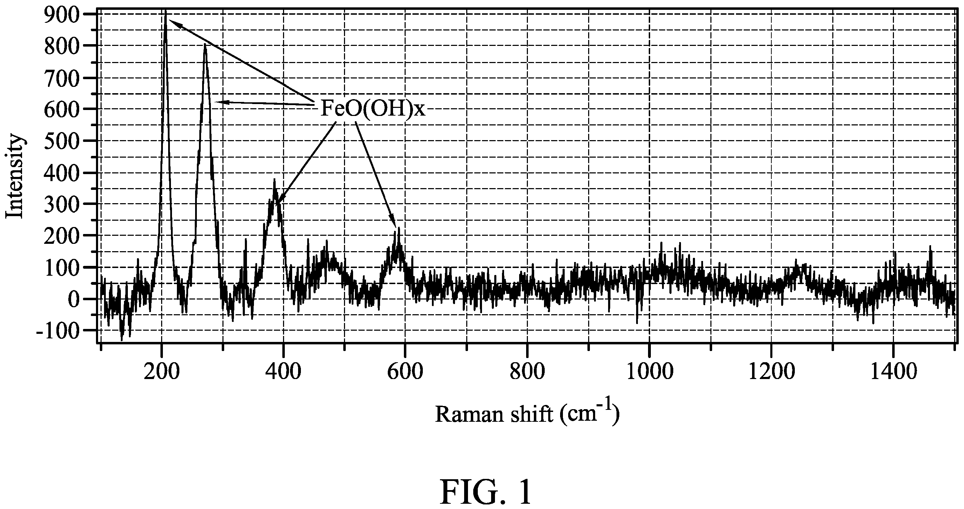

An iron nitrate aqueous solution and ammonia were stirred at high speed to mix for 3 minutes, and the pH value of the mixture was then adjusted to 9. The mixture was then continuous stirred for 120 minutes and then filtered out. The filtered cake was washed out with water and then baked to obtain an iron-based support such as porous FeO(OH)ₓ. The Raman spectrum of the iron-based support is shown in Fig. 1, which is almost free of the signals of Fe₂O₃ and Fe₃O₄(no Raman intensity was shown at around 1200-1400 cm⁻¹). The obtained iron-based support such as FeO(OH)ₓ had a specific surface area of 249 m²/g (measured and calculated by BET method, such as nitrogen adsorption at constant temperature), a pore volume of 0.39 cm³/g (measured and calculated by BJH method, such as nitrogen adsorption at constant temperature), and an average pore size of 62 Å (measured and calculated by BJH method, such as nitrogen adsorption at constant temperature). The porous FeO(OH)ₓ was then added into a potassium carbonate aqueous solution, such that the potassium carbonate was loaded on the porous FeO(OH)ₓ. The above substance was then baked and shaped to obtain an iron-based catalyst, wherein the molar percentage of the FeO(OH)ₓ was 95 mol%, and that of the potassium carbonate was 5 mol%.

The iron-based catalyst was sieved, and 9 mL of the iron-based catalyst with 12 mesh to 20 mesh was filled into a reactor of 3/8 inch. A mixture of hydrogen and carbon dioxide having a gas hourly space velocity of 1800 hr⁻¹ (H₂/CO₂=4/1, mol/mol) was introduced into the reactor at a reaction temperature of 350°C under a reaction pressure of 200 psi. The gas composition analysis (analyzed by Gas Chromatography) of the reaction revealed that, the conversion rate of the carbon dioxide was 66.0%, the yield of carbon monoxide was 1.5%, the yield of methane was 32.1%, the yield of ethene (C₂H₄) was 11.4%, the yield of ethane (C₂H₆) was 3.6%, and the yield of propene/propane (C₃H₆/C₃H₈) was 17.5%. The yield of C₁₋₃ olefin was 64.6%.

### Example 2-1

The iron-based support of porous FeO(OH)ₓ in Example 1 was added into a potassium carbonate aqueous solution, such that the potassium carbonate was loaded on the porous FeO(OH)ₓ. The above substance was then baked and shaped to obtain an iron-based catalyst, wherein the molar percentage of the FeO(OH)ₓ was 75 mol%, and that of the potassium carbonate was 25 mol%.

The iron-based catalyst was sieved, and 9 mL of the iron-based catalyst with 12 mesh to 20 mesh was filled into a reactor of 3/8 inch. A mixture of hydrogen and carbon dioxide having a gas hourly space velocity of 1800 hr⁻¹ (H₂/CO₂=4/1, mol/mol) was introduced into the reactor at a reaction temperature of 320°C under a reaction pressure of 200 psi. The gas composition analysis of the reaction revealed that, the conversion rate of the carbon dioxide was 74.0%, the yield of carbon monoxide was 1.9%, the yield of methane was 35.4%, the yield of ethene was 14.1%, the yield of ethane was 4.5%, and the yield of propene/propane was 16.4%. The yield of C₁₋₃ olefin was 70.4%.

### Example 2-2 (lower limit of H₂/CO)

The iron-based catalyst in Example 2-1 was sieved, and 9 mL of the iron-based catalyst with 12 mesh to 20 mesh was filled into a reactor of 3/8 inch. A mixture of hydrogen and carbon dioxide having a gas hourly space velocity of 1800 hr⁻¹ (H₂/CO₂=2/1, mol/mol) was introduced into the reactor at a reaction temperature of 320°C under a reaction pressure of 200 psi. The gas composition analysis of the reaction revealed that, the conversion rate of the carbon dioxide was 43.0%, the yield of carbon monoxide was 4.3%, the yield of methane was 19.8%, the yield of ethene was 6.8%, the yield of ethane was 2.6%, and the yield of propene/propane was 9.5%. The yield of C₁₋₃ olefin was 38.7%.

### Example 2-3 (excessive H₂/CO)

The iron-based catalyst in Example 2-1 was sieved, and 9 mL of the iron-based catalyst with 12 mesh to 20 mesh was filled into a reactor of 3/8 inch. A mixture of hydrogen and carbon dioxide having a gas hourly space velocity of 1800 hr⁻¹ (H₂/CO₂=6/1, mol/mol) was introduced into the reactor at a reaction temperature of 320°C under a reaction pressure of 200 psi. The gas composition analysis of the reaction revealed that, the conversion rate of the carbon dioxide was 84.7%, the yield of carbon monoxide was 0.7%, the yield of methane was 51.2%, the yield of ethene was 6.1%, the yield of ethane was 9.2%, and the yield of propene/propane was 17.5%. The yield of C₁₋₃ olefin was 84.0%.

### Example 2-4 (inadequate H₂/CO)

The iron-based catalyst in Example 2-1 was sieved, and 9 mL of the iron-based catalyst with 12 mesh to 20 mesh was filled into a reactor of 3/8 inch. A mixture of hydrogen and carbon dioxide having a gas hourly space velocity of 1800 hr⁻¹ (H₂/CO₂=1/1, mol/mol) was introduced into the reactor at a reaction temperature of 320°C under a reaction pressure of 200 psi. The gas composition analysis of the reaction revealed that, the conversion rate of the carbon dioxide was 15.3%, the yield of carbon monoxide was 6.7%, the yield of methane was 5.9%, the yield of ethene was 0.7%, the yield of ethane was 0.4%, and the yield of propene/propane was 1.6%. The yield of C₁₋₃ olefin was 8.6%.

### Example 2-5 (upper limit of reaction temperature)

The iron-based catalyst in Example 2-1 was sieved, and 9 mL of the iron-based catalyst with 12 mesh to 20 mesh was filled into a reactor of 3/8 inch. A mixture of hydrogen and carbon dioxide having a gas hourly space velocity of 1800 hr⁻¹ (H₂/CO₂=4/1, mol/mol) was introduced into the reactor at a reaction temperature of 360°C under a reaction pressure of 200 psi. The gas composition analysis of the reaction revealed that, the conversion rate of the carbon dioxide was 79.4%, the yield of carbon monoxide was 2.8%, the yield of methane was 37.3%, the yield of ethene was 13.7%, the yield of ethane was 5.5%, and the yield of propene/propane was 20.1%. The yield of C₁₋₃ olefin was 76.6%.

### Example 2-6 (lower limit of reaction temperature)

The iron-based catalyst in Example 2-1 was sieved, and 9 mL of the iron-based catalyst with 12 mesh to 20 mesh was filled into a reactor of 3/8 inch. A mixture of hydrogen and carbon dioxide having a gas hourly space velocity of 1800 hr⁻¹ (H₂/CO₂=4/1, mol/mol) was introduced into the reactor at a reaction temperature of 260°C under a reaction pressure of 200 psi. The gas composition analysis of the reaction revealed that, the conversion rate of the carbon dioxide was 26.8%, the yield of carbon monoxide was 3.7%, the yield of methane was 6.7%, the yield of ethene was 2.6%, the yield of ethane was 1.1%, and the yield of propene/propane was 12.8%. The yield of C₁₋₃ olefin was 23.2%.

### Example 2-7 (extremely high reaction temperature)

The iron-based catalyst in Example 2-1 was sieved, and 9 mL of the iron-based catalyst with 12 mesh to 20 mesh was filled into a reactor of 3/8 inch. A mixture of hydrogen and carbon dioxide having a gas hourly space velocity of 1800 hr⁻¹ (H₂/CO₂=4/1, mol/mol) was introduced into the reactor at a reaction temperature of 400°C under a reaction pressure of 200 psi. The gas composition analysis of the reaction revealed that, the conversion rate of the carbon dioxide was 74.2%, the yield of carbon monoxide was 8.0%, the yield of methane was 41.3%, the yield of ethene was 7.4%, the yield of ethane was 5.6%, and the yield of propene/propane was 11.6%. The yield of C₁₋₃ olefin was 65.9%.

### Example 2-8 (extremely low reaction temperature)

The iron-based catalyst in Example 2-1 was sieved, and 9 mL of the iron-based catalyst with 12 mesh to 20 mesh was filled into a reactor of 3/8 inch. A mixture of hydrogen and carbon dioxide having a gas hourly space velocity of 1800 hr⁻¹ (H₂/CO₂=4/1, mol/mol) was introduced into the reactor at a reaction temperature of 240°C under a reaction pressure of 200 psi. The gas composition analysis of the reaction revealed that, the conversion rate of the carbon dioxide was 13.3%, the yield of carbon monoxide was 7.0%, the yield of methane was 4.1%, the yield of ethene was 0.7%, the yield of ethane was 0.4%, and the yield of propene/propane was 1.1%. The yield of C₁₋₃ olefin was 6.3%.

### Example 2-9 (upper limit of reaction pressure)

The iron-based catalyst in Example 2-1 was sieved, and 9 mL of the iron-based catalyst with 12 mesh to 20 mesh was filled into a reactor of 3/8 inch. A mixture of hydrogen and carbon dioxide having a gas hourly space velocity of 1800 hr⁻¹ (H₂/CO₂=4/1, mol/mol) was introduced into the reactor at a reaction temperature of 320°C under a reaction pressure of 400 psi. The gas composition analysis of the reaction revealed that, the conversion rate of the carbon dioxide was 68.0%, the yield of carbon monoxide was 1.0%, the yield of methane was 27.1%, the yield of ethene was 15.7%, the yield of ethane was 3.4%, and the yield of propene/propane was 20.8%. The yield of C₁₋₃ olefin was 67.0%.

### Example 2-10 (lower limit of reaction pressure)

The iron-based catalyst in Example 2-1 was sieved, and 9 mL of the iron-based catalyst with 12 mesh to 20 mesh was filled into a reactor of 3/8 inch. A mixture of hydrogen and carbon dioxide having a gas hourly space velocity of 1800 hr⁻¹ (H₂/CO₂=4/1, mol/mol) was introduced into the reactor at a reaction temperature of 320°C under a reaction pressure of 50 psi. The gas composition analysis of the reaction revealed that, the conversion rate of the carbon dioxide was 50.8%, the yield of carbon monoxide was 5.8%, the yield of methane was 18.7%, the yield of ethene was 10.6%, the yield of ethane was 1.9%, and the yield of propene/propane was 13.9%. The yield of C₁₋₃ olefin was 45.1%.

### Example 2-11 (extremely low reaction pressure)

The iron-based catalyst in Example 2-1 was sieved, and 9 mL of the iron-based catalyst with 12 mesh to 20 mesh was filled into a reactor of 3/8 inch. A mixture of hydrogen and carbon dioxide having a gas hourly space velocity of 1800 hr⁻¹ (H₂/CO₂=4/1, mol/mol) was introduced into the reactor at a reaction temperature of 320°C under a reaction pressure of about 0 psi (pressure shown on pressure meter). The gas composition analysis of the reaction revealed that, the conversion rate of the carbon dioxide was 30.2%, the yield of carbon monoxide was 4.8%, the yield of methane was 16.7%, the yield of ethene was 4.2%, the yield of ethane was 1.5%, and the yield of propene/propane was 3.0%. The yield of C₁₋₃ olefin was 25.4%.

### Example 2-12 (upper limit of total space velocity)

The iron-based catalyst in Example 2-1 was sieved, and 9 mL of the iron-based catalyst with 12 mesh to 20 mesh was filled into a reactor of 3/8 inch. A mixture of hydrogen and carbon dioxide having a gas hourly space velocity of 3000 hr⁻¹ (H₂/CO₂=3.5/1, mol/mol) was introduced into the reactor at a reaction temperature of 320°C under a reaction pressure of about 200 psi. The gas composition analysis of the reaction revealed that, the conversion rate of the carbon dioxide was 52.5%, the yield of carbon monoxide was 2.2%, the yield of methane was 22.0%, the yield of ethene was 9.5%, the yield of ethane was 3.2%, and the yield of propene/propane was 15.9%. The yield of C₁₋₃ olefin was 50.6%.

### Example 2-13 (lower limit of total space velocity)

The iron-based catalyst in Example 2-1 was sieved, and 9 mL of the iron-based catalyst with 12 mesh to 20 mesh was filled into a reactor of 3/8 inch. A mixture of hydrogen and carbon dioxide having a gas hourly space velocity of 300 hr⁻¹ (H₂/CO₂=3.5/1, mol/mol) was introduced into the reactor at a reaction temperature of 320°C under a reaction pressure of about 200 psi. The gas composition analysis of the reaction revealed that, the conversion rate of the carbon dioxide was 59.5%, the yield of carbon monoxide was 2.1%, the yield of methane was 26.9%, the yield of ethene was 11.3%, the yield of ethane was 3.8%, and the yield of propene/propane was 15.4%. The yield of C₁₋₃ olefin was 57.4%.

### Example 2-14 (without potassium carbonate)

The iron-based support of porous FeO(OH)ₓ without potassium carbonate loaded thereon in Example 1 was sieved, and 9 mL of the porous FeO(OH)ₓ powder with 12 mesh to 20 mesh was filled into a reactor of 3/8 inch. A mixture of hydrogen and carbon dioxide having a gas hourly space velocity of 1800 hr⁻¹ (H₂/CO₂=4/1, mol/mol) was introduced into the reactor at a reaction temperature of 320°C under a reaction pressure of about 200 psi. The gas composition analysis of the reaction revealed that, the conversion rate of the carbon dioxide was 14.8%, the yield of carbon monoxide was 0.1%, the yield of methane was 14.4%, the yield of ethene was 0.0%, the yield of ethane was 0.2%, and the yield of propene/propane was 0.1%. The yield of C₁₋₃ olefin was 14.7%.

### Example 2-15 (excessive potassium carbonate)

The iron-based support of porous FeO(OH)ₓ in Example 1 was added into a potassium carbonate aqueous solution, such that the potassium carbonate was loaded on the porous FeO(OH)ₓ. The above substance was then baked and shaped to obtain an iron-based catalyst, wherein the molar percentage of the FeO(OH)ₓ was 60 mol%, and that of the potassium carbonate was 40 mol%.

The iron-based catalyst was sieved, and 9 mL of the iron-based catalyst with 12 mesh to 20 mesh was filled into a reactor of 3/8 inch. A mixture of hydrogen and carbon dioxide having a gas hourly space velocity of 1800 hr⁻¹ (H₂/CO₂=4/1, mol/mol) was introduced into the reactor at a reaction temperature of 320°C under a reaction pressure of about 200 psi. The gas composition analysis of the reaction revealed that, the conversion rate of the carbon dioxide was 16.5%, the yield of carbon monoxide was 7.1%, the yield of methane was 5.3%, the yield of ethene was 1.2%, the yield of ethane was 0.8%, and the yield of propene/propane was 2.2%. The yield of C₁₋₃ olefin was 9.5%.

### Comparative Example 1

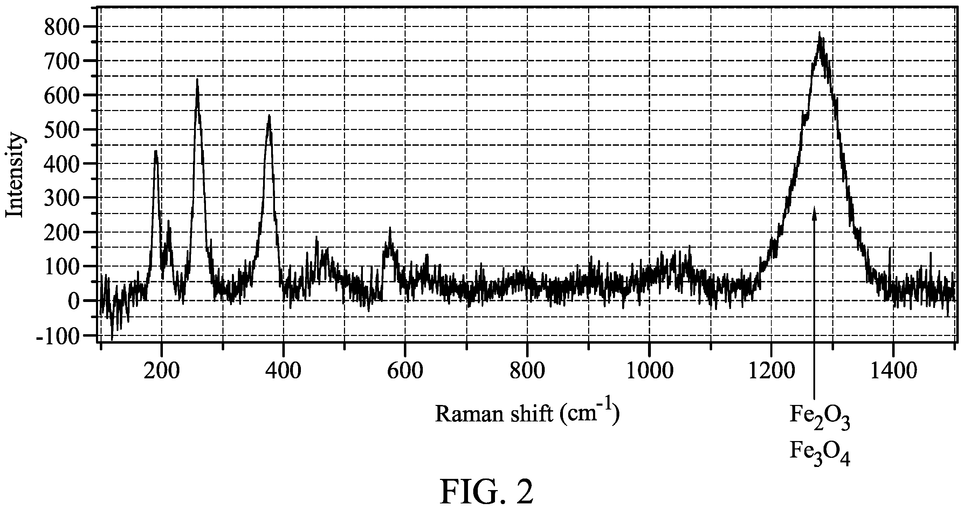

An iron nitrate aqueous solution and ammonia were mixed, and the pH value of the mixture was then adjusted to 9 and kept for 120 minutes and then filtered. The filtered cake was washed out with water and then baked to obtain an iron-based support such as porous FeO(OH)ₓ, Fe₂O₃, and Fe₃O₄. The Raman spectrum of the iron-based support is shown in Fig. 2, which includes a large amount of Fe₂O₃ and Fe₃O₄. The obtained iron-based support had a specific surface area of 41.6 m²/g (measured and calculated by BET method, such as nitrogen adsorption at constant temperature), a pore volume of 0.24 cm³/g (measured and calculated by BJH method, such as nitrogen adsorption at constant temperature), and an average pore size of 177 Å (measured and calculated by BJH method, such as nitrogen adsorption at constant temperature). The iron-based support such as FeO(OH)ₓ, Fe₂O₃, and Fe₃O₄ was then added into a potassium carbonate aqueous solution, such that the potassium carbonate was loaded on the iron-based support. The above substance was then baked and shaped to obtain an iron-based catalyst, wherein the molar percentage of the iron-based support such as FeO(OH)ₓ, Fe₂O₃, and Fe₃O₄ was 95 mol%, and that of the potassium carbonate was 5 mol%.

The iron-based catalyst was sieved, and 9 mL of the iron-based catalyst with 12 mesh to 20 mesh was filled into a reactor of 3/8 inch. A mixture of hydrogen and carbon dioxide having a gas hourly space velocity of 1800 hr⁻¹ (H₂/CO₂=4/1, mol/mol) was introduced into the reactor at a reaction temperature of 350°C under a reaction pressure of about 200 psi. The gas composition analysis of the reaction revealed that, the conversion rate of the carbon dioxide was 22.2%, the yield of carbon monoxide was 20.9%, the yield of methane was 0.9%, the yield of ethene was 0.3%, the yield of ethane was 0.2%, and the yield of propene/propane was 0%. The yield of C₁₋₃ olefin was 1.4%.

### Comparative Example 2

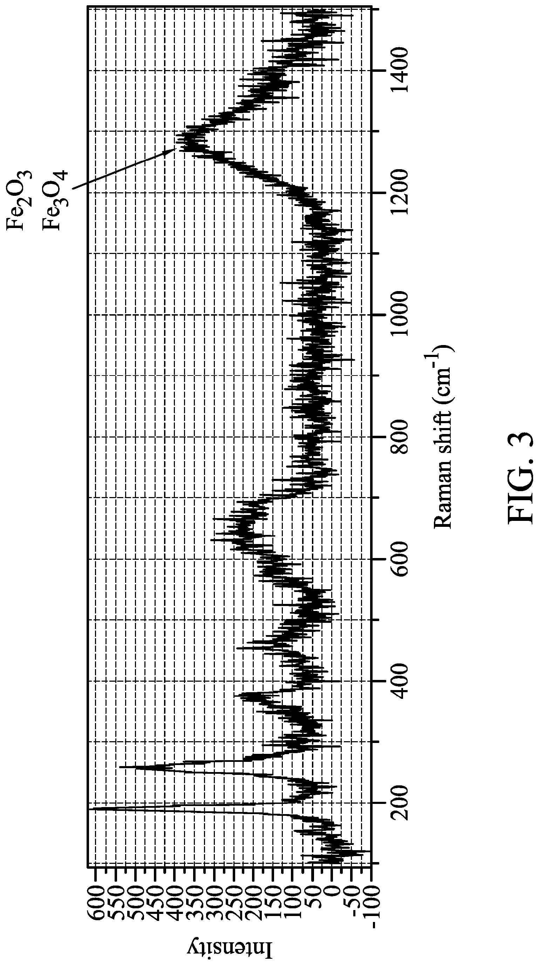

A16267 commercially available from Alfa (iron (III) hydroxide, alpha-phase, 99+% FeO(OH), CAS: 20334-40-4) serving as an iron-based support, and the Raman spectrum of the A16267 is shown in Fig. 3, which includes porous FeO(OH)ₓ, Fe₂O₃, and Fe₃O₄. The iron-based support A16267 commercially available from Alfa had a specific surface area of 14.3 m²/g (measured and calculated by BET method, such as nitrogen adsorption at constant temperature), a pore volume of 0.06 cm³/g (measured and calculated by BJH method, such as nitrogen adsorption at constant temperature), and an average pore size of 166 Å (measured and calculated by BJH method, such as nitrogen adsorption at constant temperature). The iron-based support was then added into a potassium carbonate aqueous solution, such that the potassium carbonate was loaded on the iron-based support. The above substance was then baked and shaped to obtain an iron-based catalyst, wherein the molar percentages of the iron-based support such as FeO(OH)ₓ, Fe₂O₃, and Fe₃O₄ was 95 mol%, and that of the potassium carbonate was 5 mol%.

The iron-based catalyst was sieved, and 9 mL of the iron-based catalyst with 12 mesh to 20 mesh was filled into a reactor of 3/8 inch. A mixture of hydrogen and carbon dioxide having a gas hourly space velocity of 1800 hr⁻¹ (H₂/CO₂=4/1, mol/mol) was introduced into the reactor at a reaction temperature of 400°C under a reaction pressure of about 200 psi. The gas composition analysis of the reaction revealed that, the conversion rate of the carbon dioxide was 25.7%, the yield of carbon monoxide was 24.5%, the yield of methane was 0.6%, the yield of ethene was 0.4%, the yield of ethane was 0 %, and the yield of propene/propane was 0.2%. The yield of C₁₋₃ olefin was 1.2%. The above experiment was repeated except the reaction temperature being decreased to 350°C, resulted in the conversion rate of the carbon dioxide <10%.

It will be apparent to those skilled in the art that various modifications and variations can be made to the disclosed methods and materials. It is intended that the specification and examples be considered as exemplary only, with the true scope of the disclosure being indicated by the following claims and their equivalents.

## Claims

1. An iron-based catalyst, comprising:
70 mol% to 97 mol% of porous FeO(OH)ₓ, wherein x is 1 or 2; and
3 mol% to 30 mol% of alkaline metal compound loaded on the porous FeO(OH)ₓ.

2. The iron-based catalyst as claimed in claim 1, wherein the porous FeO(OH)ₓ has a specific surface area of at least 100 m²/g.

3. The iron-based catalyst as claimed in claim 1, wherein the porous FeO(OH)ₓ has a pore volume of 0.2 cm³/g to 0.5 cm³/g.

4. The iron-based catalyst as claimed in claim 1, wherein the porous FeO(OH)ₓ has an average pore size of 40 Å to 70 Å.

5. The iron-based catalyst as claimed in claim 1, wherein the alkaline metal compound comprises sodium carbonate, potassium carbonate, sodium hydroxide, potassium hydroxide, sodium oxide, potassium oxide, or a combination thereof.

6. A method of hydrogenating carbon dioxide, comprising:
contacting carbon dioxide and hydrogen with an iron-based catalyst to form CₙH₂ₙ, CₙH₂ₙ₊₂, or a combination thereof, wherein n is 1 to 9,
wherein the iron-based catalyst comprises:
70 mol% to 97 mol% of porous FeO(OH)ₓ, wherein x is 1 or 2; and
3 mol% to 30 mol% of alkaline metal compound loaded on the porous FeO(OH)ₓ.

7. The method as claimed in claim 6, wherein the hydrogen and the carbon dioxide have a ratio of 2:1 to 4:1, and the hydrogen and the carbon dioxide have a gas hourly space velocity of 300 hr⁻¹ to 3000 hr⁻¹.

8. The method as claimed in claim 6, wherein the step of contacting the carbon dioxide and the hydrogen with the iron-based catalyst is performed under a pressure of 50 psi to 400 psi at a temperature of 260°C to 360°C.

9. The method as claimed in claim 6, wherein the conversion rate of the carbon dioxide is 50% to 80%, and the yield of CₙH₂ₙ, CₙH₂ₙ₊₂, or a combination thereof is 45% to 75%.
